# EUROPÄISCHE PATENTANMELDUNG

(11) **EP 1 745 918 A2**
(43) Veröffentlichungstag der Anmeldung: **24.01.2007**
(21) Anmeldenummer: 06117315.9
(22) Anmeldetag: 17.07.2006
(51) Int. Cl.: B29D 1/00, B29C 45/26

(54) **Verfahren zum Urformen eines Formteils und durch Urformen hergestelltes Formteil, insbesondere Mutter**

(30) Priorität: 20.07.2005 DE 102005034507
(71) Anmelder: Newfrey LLC, Newark, DE 19711 (US)
(72) Erfinder: Schmidt, Michael, 35463, Fernwald (DE)
(74) Vertreter: Haar, Lucas Heinz Jörn

(57) **Zusammenfassung**

Bei dem beschriebenen Verfahren zum Urformen eines Formteils mit einer Öffnung und einem in der Öffnung ausgebildeten Innengewinde, das wenigstens in zwei verschiedenen Sektoren angeordnete Teilstücke eines Gewindegangs aufweist, werden die Teilstücke des Innengewindes durch einen ersten Formkern geformt werden, der in ersten Sektoren Gewindeteilstücke zur Formung des Innengewindes und in zwischen den ersten Sektoren liegenden zweiten Sektoren gewindefreie Aussparungen aufweist, daß durch in den Aussparungen angeordnete zweite Formkerne gewindefreie Wandabschnitte der Öffnung geformt werden und daß zum Entformen des Formteils zunächst die zweiten Formkerne in axialer Richtung aus der Öffnung heraus gezogen werden, danach der erste Formkern in dem Formteil soweit gedreht wird, bis seine Gewindeteilstücke den gewindefreien Wandabschnitten der Öffnung gegenüberliegen, und dann in axialer Richtung aus der Öffnung heraus gezogen wird.

Das Formteil hat eine Öffnung (5) und einem in der Öffnung (5) ausgebildeten Innengewinde, das wenigstens zwei in verschiedenen ersten Sektoren der Öffnung (5) angeordnete Teilstücke (7) eines Gewindegangs aufweist. Zwischen den ersten Sektoren sind zweite Sektoren mit gewindefreien Wandabschnitten (8) angeordnet, die radial außerhalb der Rotationskontur des Innengewindes liegen.

## Beschreibung

Die Erfindung betrifft ein Verfahren zum Urformen eines Formteils mit einer Öffnung und einem in der Öffnung ausgebildeten Innengewinde, das wenigstens zwei in verschiedenen Sektoren angeordnete Teilstücke eines Gewindegangs aufweist, wobei die Öffnung und die Teilstücke des Innengewindes durch Formkerne geformt werden. Die Erfindung betrifft weiterhin ein nach einem derartigen Verfahren hergestelltes Formteil, insbesondere eine Mutter.

Bei dem Urformen kleiner Stückzahlen von Formteilen aus Kunststoff ist es bekannt, Innengewinde durch in das Spritzwerkzeug eingelegte, verlorene Kerne zu formen, die nach dem Formprozeß mit dem Formteil entformt werden. Außerhalb des Werkzeuges muß der Kern in aufwendiger Weise aus dem Formteil herausgedreht werden. Es ist weiterhin bekannt, zum Formen von Innengewinden Faltkerne zu verwenden. Hierbei ist der Kern in Segmente aufgeteilt, wobei nach dem Formprozeß durch eine radial gerichtete Bewegung der Segmente eine Freistellung des Gewindes erfolgt. Bei der Herstellung von Segmentgewinden können leicht entformbare Formkerne mit Schrägschiebern angewendet werden. Beide vorgenannten Lösungen haben den Nachteil, daß sie komplizierte und aufwendige Formkerne benötigen. Insbesondere für kleinere Gewindedurchmesser ist es außerdem bekannt, Ausdrehkerne zu verwenden. Das Entformen der Ausdrehkerne erfordert aufwendige Werkzeuge und benötigt von der Gewindelänge abhängige Zeit.

Aus DE-A1-40 04 550 ist ein mit Innengewinde versehenes Formteil bekannt, das aus zwei Grundkörpern zusammenzusetzen ist, wobei die Teilungsebene durch die Zentralachse des Innengewindes verläuft. Die zylindrischen, offenen Innengewinde der Grundkörper sind dadurch einfach zu entformen. Allerdings verursacht das Zusammensetzen der Grundkörper zusätzliche Kosten und Festigkeitsprobleme.

Zur Vermeidung der vorgenannten Probleme ist es ferner bekannt urgeformte Kunststoffmuttern mit einer glatten, inneren Bohrung zu versehen, welche einen sich nach innen verjüngenden konischen Einfixhrungsbereich hat. Der Innendurchmesser der Bohrung wird dabei so bemessen, daß durch das Aufschrauben der Mutter auf einen Gewindebolzen in der Bohrung der Mutter ein Gewinde ausgebildet wird. Eine derartige Kunststoffmutter ist aus EP-B1-0 554 094 bekannt. Diese bekannte Kunststoffmutter weist zudem im Eingangsbereich der glatten Bohrung eine durch mehrere achsparallele röhrenförmige Hohlräume gebildete Abstreifzone auf Diese Hohlräume schneiden sich mit der Wandung der Bohrung der Mutter, wodurch Schneidkanten gebildet werden, welche die Oberfläche eines eingeschraubten Bolzens abschaben und Anlagerungen entfernen sollen. Jeweils benachbarte Hohlräume sind über Verbindungshohlräume verbunden, die das vom Gewindebolzen abgestreifte Material aufnehmen. Kunststoffinuttern mit glatter Bohrung haben den Nachteil, daß sie höherer Beanspruchung ausgesetzt sind und bei der Montage höhere Drehmomente erfordern. Die Belastbarkeit in axialer Richtung ist kleiner als bei Kunststoffmuttern mit vorgeformtem Gewinde.

Es ist ferner aus DE-A-2 058 316 eine gewindeschneidende Sechskantmutter bekannt, bei welcher nahe einer Stirnfläche von entgegengesetzten Schlüsselflächen ausgehend zwei Löcher in die Mutter gebohrt sind, die das Innengewinde der Mutter schneiden. Die Löcher laufen parallel zueinander und zur Mittelachse der Mutter versetzt, wodurch an den Schnittstellen der Löcher mit dem Gewinde Schneidkanten zum Schneiden von Gewindegängen gebildet werden. Zur einfachen Herstellung durch Urformen eignet sich diese Mutter nicht.

Ein Verfahren und ein Formteil der eingangs genannten Art sind aus DE-U1- 296 18 639 bekannt. Das urgeformte Formteil hat eine durchgehende, im wesentlichen kreisrunde Öffnung, in welcher zwei Teilstücke eines einzigen, gleichmäßig steigenden Gewindegangs ausgebildet sind. Die beiden einander gegenüberliegenden Teilstücke erstrecken sich jeweils über einen Umfangswinkel von 170 ° und bilden somit einen fast vollständigen Gewindegang. Die Formung des Innengewindes erfolgt mit zwei Formkernen, die entlang der Gewindegangfläche voneinander getrennt sind und die Teilstücke sowie die daran angrenzenden beiden Abschnitte der Öffnung formen. Zur Entformung können die beiden Formkerne in entgegengesetzter axialer Richtung mühelos und ohne großen Zeitaufwand herausgezogen werden. Dieses bekannte Verfahren eignet sich nicht zur Herstellung von Formteilen mit zwei oder mehr nebeneinander liegenden Gewindegängen.

Der Erfindung liegt die Aufgabe zugrunde, eine einfaches und wirtschaftliches Verfahren der eingangs genannten Art anzugeben, das sich zum Urformen von Innengewinden größerer axialer Länge eignet. Es ist weiterhin Aufgabe der Erfmdung ein durch Urformen einfach herstellbares Formteil mit Innengewinde zu schaffen, das für höhere Belastungen geeignet ist.

Erfindungsgemäß wird die Aufgabe hinsichtlich des Verfahrens durch die Merkmale des Patentanspruchs 1 und hinsichtlich des Formteils durch die Merkmale des Patentanspruchs 6 gelöst. Vorteilhafte Ausgestaltungen des Verfahrens und des Formteils sind in den diesen Ansprüchen jeweils zugeordneten Unteransprüchen angegeben.

Das Verfahren nach der Erfindung sieht vor, daß die Teilstücke des Innengewindes durch einen ersten Formkern geformt werden, der in ersten Sektoren Gewindeteilstücke zur Formung des Innengewindes und in zwischen den ersten Sektoren liegenden zweiten Sektoren gewindefreie Aussparungen aufweist, wobei insbesondere die ersten und zweiten Sektoren sich jeweils über gleiche Zentriwinkel erstrecken, daß durch zweite Formkerne, die in den Aussparungen des ersten Formkerns angeordnet sind, gewindefreie Wandabschnitte der Öffnung geformt werden und daß zum Entformen des Formteils zunächst die zweiten Formkerne in axialer Richtung aus der Öffnung herausgezogen werden, danach der erste Formkern in dem Formteil so weit gedreht wird, bis seine Gewindeteilstücke den gewindefreien Abschnitten der Öffnung gegenüberliegen, und dann in axialer Richtung aus der Öffnung herausgezogen wird.

Bei dem erfindungsgemäßen Verfahren ist zum Entformen neben der axialen Bewegung beider Formkerne und ungeachtet der axialen Länge des Innengewindes nur eine Drehung des ersten Formkerns um einen Winkel von 360° geteilt durch die Summe der ersten und zweiten Sektoren erforderlich. Dies ermöglicht ein einfaches und schnelles Entformen des Formteils und führt zu einer erheblich einfacheren und kompakteren Gestaltung der Formwerkzeuge. Die Drehung des ersten Formkerns erfordert keine aufwendigen Antriebe, sondern kann mit Hilfe einer einfachen Kurvensteuerung bewirkt werden, die eine axiale Bewegung in eine Drehung um den erforderlichen Drehwinkel umsetzt. Insgesamt ermöglicht somit das erfindungsgemäße Verfahren eine besonders wirtschaftliche Herstellung von Formteilen mit Innengewinde.

Bei dem erfindungsgemäß herstellten Formteil erstreckt sich zwar das Innengewinde nur über einen Teil der Innenfläche der Öffnung. Für zahlreiche Anwendungsfälle ist dies jedoch ausreichend, und es lassen sich höhere Haltekräfte erzielen als mit Formteilen, die eine glatte Öffnung haben, in deren Wand sich die Gewindegänge des Bolzens beim Einschrauben eingraben. Die gewindefreien Wandabschnitte der Öffnung können als Längsnuten ausgebildet sein, die an den Enden der Teilstücke des Innengewindes Abstreif- oder Schneidkanten bilden, die zum Entfernen von Lackresten, Unterbodenschutz oder dergleichen von in die Öffnung eingeschraubten Bolzen dienen, wobei die Nuten des entfernte Material aufnehmen.

Die zweiten Formkerne bieten bei dem erfindungsgemäßen Verfahren die Möglichkeit, dem Formteil im Bereich der gewindefreien Sektoren eine zur Erfüllung weiterer Funktionen geeignete Formgestalt zu geben. Der radiale Mittenabstand der die gewindefreien Wandabschnitte formenden Kernfläche der zweiten Formkerne kann hierbei gleich oder größer als der Außenradius des Innengewindes sein. Die zweiten Formkerne können eine beliebige Querschnittsform, beispielsweise einen kreisförmigen, ovalen oder polygonalen Querschnitt haben. Vorzugsweise sind die zweiten Formkerne als zylindrische Stifte ausgebildet, wobei der erste Formkern in den zweiten Sektoren teilzylindrische Nuten hat, in denen die zylindrischen Stifte geführt sind.

Die Anzahl der zweiten Formkerne kann unterschiedlich sein. Sie wird durch die Anzahl der Sektoren bestimmt und kann zwei oder mehr betragen. Besonders vorteilhaft ist eine Ausführung mit sechs Sektoren, deren Zentriwinkel 60° beträgt und die drei zweite Formkerne aufweist. Hierdurch ergibt sich eine ausreichend gleichmäßige Verteilung der Teilstücke des Innengewindes auf dem Gewindeumfang bei ausreichender Länge der Einzelteilstücke.

Das nach dem erfindungsgemäßen Verfahren durch Urformen hergestellte Formteil hat eine Öffnung mit wenigstens zwei, in verschiedenen ersten Sektoren der Öffnung angeordneten Teilstücken eines Gewindegangs, wobei zwischen den ersten Sektoren zweite Sektoren mit gewindefreien Wandabschnitten angeordnet sind, die radial außerhalb der Rotationskontur des Innengewindes liegen. Vorzugsweise haben die ersten und zweiten Sektoren jeweils gleiche Zentriwinkel von maximal 90°. Das erfindungsgemäß gestaltete Formteil kann insbesondere aus Kunststoff einfach und kostengünstig hergestellt werden. Das Innengewinde des Formteils kann ohne nachteilige Beeinflussung des Herstellprozesses eine vergleichsweise große axiale Länge haben und die gewindefreien Wandabschnitte können zur Verwirklichung zusätzlicher Funktionsmerkmale genutzt werden. Beispielsweise können die gewindefreien Wandabschnitte als achsparallele, insbesondere teilzylindrische Nuten ausgebildet sein, die an ihren Rändern Abstreif- oder Schneidkanten bilden, welche auf der Oberfläche eines Bolzens auf einer Schraube haftendes Material, wie Farbe, Unterbodenschutz, Wachs oder Schmutz, abstreifen, wobei die Nuten das abgestreifte Material aufnehmen, so daß der Einschraubvorgang durch dieses Material nicht behindert und eine Beschädigung des Innengewindes vermieden wird.

Das erfmdungsgemäße Formteil kann vorteilhaft eine Mutter bilden, die auf ihrem Außenumfang einen zum Innengewinde koaxialen Werkzeugeingriffsbereich, insbesondere einen Sechskant hat. Bei einem sechskantigen Werkzeugeingriffsbereich ist es vorteilhaft, wenn in der Öffnung drei erste Sektoren mit Gewindeteilstücken und drei zweite Sektoren mit gewindefreien Wandabschnitten vorgesehen sind, wobei der Zentriwinkel der Sektoren 60° beträgt. Weiterhin ist es zweckmäßig, wenn die gewindefreien Wandabschnitte jeweils Ecken des Werkzeugeingriffsbereichs benachbart sind, da hierdurch eine bessere Materialausnutzung erzielt wird.

Die Erfindung wird nachfolgend anhand von Ausführungsbeispielen näher erläutert, die in der Zeichnung dargestellt sind. Es zeigen
- Figur 1: einen Querschnitt durch ein Formwerkzeug zum Urformen eines Formteils nach dem erfindungsgemäßen Verfahren während des Formprozesses,
- Figur 2: einen Querschnitt durch das Formwerkzeug gemäß Figur 1 in einer für das Endformen vorgesehenen Stellung,
- Figur 3: einen Axialschnitt durch ein mit Hilfe des Formwerkzeugs gemäß Figur 1 urgeformtes Formteil und,
- Figur 4: eine Ansicht des Formteils gemäß Figur 3 in axialer Richtung.

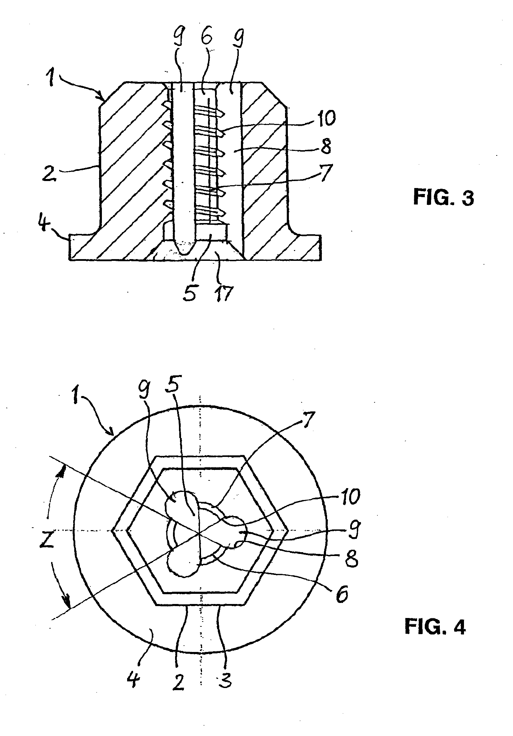

Bei dem in den Figuren 3 und 4 dargestellten Formteil 1 handelt es sich um eine Mutter, die aus einem thermoplastischen Kunststoff besteht und im Spritzgießverfahren urgeformt ist. Das Formteil 1 hat eine Außenkontur in Form eines sechskantigen Prismas. Durch diese Außenkontur wird ein Werkzeugeingriffsbereich 2 mit Schlüsselflächen 3 gebildet. An einer Stirnseite weist das Formteil 1 einen angeformten, kreisscheibenförmigen Flansch 4 auf.

Durch das Formteil 1 erstreckt sich in Längsrichtung des Sechskantprismas eine mittige, durchgehende Öffnung 5 zur Aufnahme eines mit einem Außengewinde versehenen Bolzens oder einer Schraube. Die Öffnung 5 ist in sechs Sektoren gegliedert, die im Wechsel unterschiedlich gestaltet sind und alle im wesentlichen den gleichen Zentriwinkel Z haben, der 60° beträgt. In drei Sektoren wird die Öffnung von Abschnitten 6 einer zylindrischen Bohrungsfläche begrenzt, in der Teilstücke 7 eines hinterschnittenen Innengewindes ausgebildet sind. In den dazwischenliegenden Sektoren weist die Öffnung 5 gewindefreie Wandflächen 8 auf, die eine konkave Krümmung haben und in jedem Sektor eine teilzylindrische Nut 9 bilden. Die Nuten 9 verlaufen achsparallel und haben einen konstanten Querschnitt. Durch die Form und Lage der Nuten 9 entstehen an den Enden der Teilstücke 7 des Innengewindes scharfe Abstreif- oder Schneidkanten 10, die beim Einschrauben eines Gewindebolzens an diesem haftendes Material abstreifen und dadurch verhindern, daß dieses Material in das Gewinde des Formteils 1 gelangt und dadurch das Einschrauben behindert oder das Gewinde zerstört. Das abgestreifte Material kann sich in den durch die Nut 9 geschaffenen Freiräumen sammeln und auch an den offenen Enden der Nuten 9 austreten.

Auf der Flanschseite weist die Öffnung 5 einen sich nach außen konisch erweiternden Einführbereich 7 auf, durch den das Ansetzen und Aufschrauben des Formteils auf einen Gewindebolzen erleichtert wird. Das entgegengesetzte Ende der Öffnung 5 ist offen, kann aber auch geschlossen ausgeführt sein.

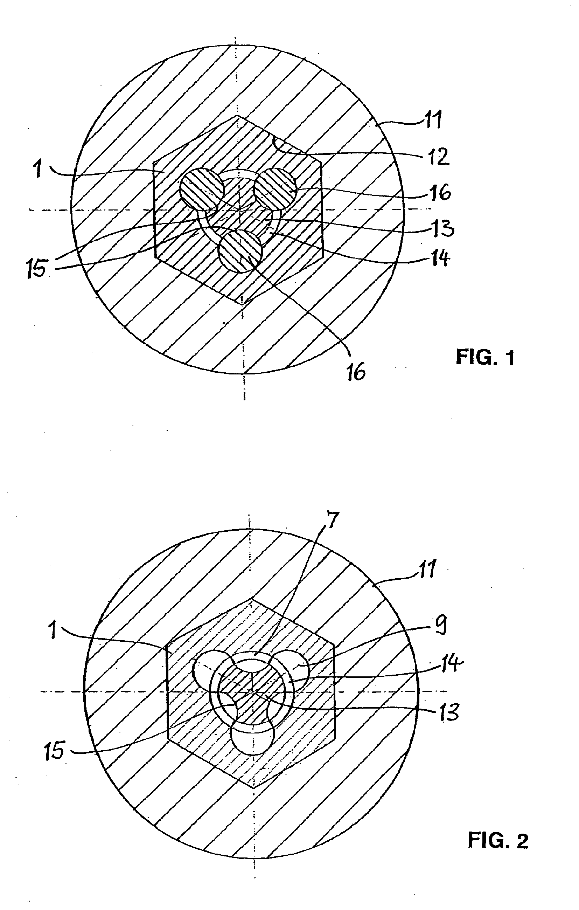

Anhand der Figuren 1 und 2 wird das Verfahren zum Urformen des Formteils 1 im Folgenden erläutert. Gezeigt ist der Querschnitt durch eine Spritzgießform 11 die einen Hohlraum 12 in der Form der Außenkontur des Formteils 1 umschließt. In der Zeichnung zu sehen ist lediglich der sechseckige Querschnitt des Hohlraums 12 im Bereich des Werkzeugeingriffsbereichs 2 des Formteils 1. In der Mitte des Hohlraums 12 befindet sich ein erster Formkern 13, der in drei Sektoren Gewindeteilstücke 14 zur Formung der Teilstücke 7 des Innengewindes des Formteils 1 hat. In den Sektoren, die zwischen den Gewindeteilstücken 14 liegen, weist der erste Formkern 13 teilzylindrische Nuten 15 auf, in denen zweite Formkerne 16 angeordnet sind. Die zweiten Formkerne 16 haben die Form zylindrischer Stifte, deren Mantelflächen die gleiche Krümmung haben wie die Wandflächen der Nuten 15. Die zweiten Formkerne 16 liegen also spielfrei an den Wandflächen der Nuten 15 an. Sie können außerdem in Längsrichtung der Nuten 15 bewegt werden. Zweckmäßigerweise sind die zweiten Formkerne 16 außerhalb des Hohlraums 12 der Spritzgießform 11 miteinander verbunden, so daß sie gemeinsam relativ zum ersten Formkern 13 bewegt und beim Entformen aus dem Formteil 1 herausgezogen werden können. Der erste Formkern 13 ist ebenfalls axial bewegbar und außerdem um seine Längsachse begrenzt drehbar.

Figur 1 zeigt die Formkerne 13, 16 in der Stellung, die zum Spritzgießen des Formteils 1 bestimmt ist. Ist der Spritzgießprozeß beendet, so werden zum Entformen zunächst die zweiten Kerne 16 aus der Öffnung 5 des Formteils in axialer Richtung herausgezogen. Die von den zweiten Kernen 16 gebildeten Nuten 9 sind nun leer und bilden Freiräume, in die die Gewindeteilstücke 14 durch Drehen des ersten Formkerns 13 hineinbewegt werden können. In Figur 2 ist der Entformungszustand gezeigt, bei dem sich nach einer Drehung des Formkerns 13 um den Zentriwinkel Z der Sektoren die Gewindeteilstücke 14 vollständig in den Nuten 9 befinden. In dieser Stellung sind die Gewindeteilstücke 14 nicht mehr mit den Gewindeteilstücken 7 des Formteils 1 in Eingriff, so daß auch der erste Formkern 13 in axialer Richtung aus dem Formteil 1 herausgezogen werden kann. Anschließend kann das Formteil 1 mit Hilfe eines Auswerfers aus der zuvor bereits geöffneten Spritzgießform 11 ausgeworfen werden.

Wie die beschriebene Verfahrensweise zeigt, ist zum Entformen des ersten Formkerns 13 lediglich eine kurze Drehung desselben erforderlich. Dies läßt sich mit einem einfachen, kostengünstig herstellbaren und geringen Platzbedarf erfordernden Antrieb leicht bewerkstelligen. Ein zeitraubendes des Ausschraubens eines herkömmlichen Ausdrehkerns entfällt.

## Patentansprüche

1. Verfahren zum Urformen eines Formteils mit einer Öffnung und einem in der Öffnung ausgebildeten Innengewinde, das wenigstens in zwei verschiedenen Sektoren angeordnete Teilstücke eines Gewindegangs aufweist, wobei die Öffnung und die Teilstücke des Innengewindes durch Formkerne geformt werden, **dadurch gekennzeichnet, daß** die Teilstücke des Innengewindes durch einen ersten Formkern geformt werden, der in ersten Sektoren Gewindeteilstücke zur Formung des Innengewindes und in zwischen den ersten Sektoren liegenden zweiten Sektoren gewindefreie Aussparungen aufweist, daß durch in den Aussparungen angeordnete zweite Formkerne gewindefreie Wandabschnitte der Öffnung geformt werden und daß zum Entformen des Formteils zunächst die zweiten Formkerne in axialer Richtung aus der Öffnung heraus gezogen werden, danach der erste Formkern in dem Formteil soweit gedreht wird, bis seine Gewindeteilstücke den gewindefreien Wandabschnitten der Öffnung gegenüberliegen, und dann in axialer Richtung aus der Öffnung heraus gezogen wird.

2. Verfahren nach Anspruch 1, **dadurch gekennzeichnet, daß** der radiale Mittenabstand der die gewindefreien Wandabschnitte formenden Kernflächen der zweiten Formkerne gleich oder größer als der Außenradius des Innengewindes ist.

3. Verfahren nach einem der Ansprüche 1 oder 2, **dadurch gekennzeichnet, daß** die zweiten Formkerne als zylindrische Stifte ausgebildet sind und der erste Formkern in den zweiten Sektoren teilzylindrische Nuten hat, in denen die zylindrischen Stifte geführt sind.

4. Verfahren nach einem der vorhergehenden Ansprüche, **dadurch gekennzeichnet, daß** die ersten und zweiten Sektoren gleiche Zentriwinkel haben.

5. Verfahren nach dem vorhergehenden Anspruch, **dadurch gekennzeichnet, daß** der Zentriwinkel der Sektoren maximal 90°, insbesondere 60° beträgt.

6. Durch Urformen hergestelltes Formteil mit einer Öffnung (5) und einem in der Öffnung (5) ausgebildeten Innengewinde, das wenigstens zwei in verschiedenen ersten Sektoren der Öffnung (5) angeordnete Teilstücke (7) eines Gewindegangs aufweist, **dadurch gekennzeichnet, daß** zwischen den ersten Sektoren, welche die Teilstücke (7) des Innengewindes enthalten, zweite Sektoren mit gewindefreien Wandfläche (8) angeordnet sind, die radial außerhalb der Rotationskontur des Innengewindes liegen.

7. Formteil nach dem vorhergehenden Anspruch, **dadurch gekennzeichnet, daß** die ersten und zweiten Sektoren jeweils gleiche Zentriwinkel haben.

8. Formteil nach einem der Ansprüche 6 oder 7, **dadurch gekennzeichnet, daß** die gewindefreien Wandfläche (8) als achsparallele, insbesondere teilzylindrische Nuten (9) ausgebildet sind

9. Formteil nach einem der Ansprüche 6 bis 8, **dadurch gekennzeichnet, daß** die Nuten (9, 15) an ihren Rändern Abstreif- oder Schneidkanten (10) bilden.

10. Formteil nach einem der Ansprüche 6 bis 9, **dadurch gekennzeichnet, daß** drei erste und drei zweite Sektoren vorgesehen sind, wobei der Zentriwinkel 60° beträgt.

11. Formteil nach einem der Ansprüche 6 bis 10, **dadurch gekennzeichnet, daß** es als Mutter ausgebildet ist, die auf ihrem Außenumfang einen zum Innengewinde koaxialen Werkzeugeingriffsbereich (2) hat.

12. Formteil nach dem vorhergehenden Anspruch, **dadurch gekennzeichnet, daß** die gewindefreien Wandabschnitte (8) jeweils den Ecken des Werkzeugeingriffsbereichs (2) benachbart sind.

13. Formteil nach einem der Ansprüche 6 bis 12, **gekennzeichnet durch** einen am Eintrittsende der Öffnung (5) ausgebildeten Einführbereich (17), der einen sich nach außen erweiterten Querschnitt hat.
